# EUROPEAN PATENT APPLICATION

(11) **EP 4 729 348 A1**
(43) Date of publication of application: **22.04.2026**
(21) Application number: 23941282.8
(22) Date of filing: 25.10.2023
(51) Int. Cl.: B60L 53/80, B60L 53/60

(54) **BATTERY SWAPPING SYSTEM, BATTERY SWAPPING SYSTEM CONTROL METHOD, CONTROL DEVICE, AND STORAGE MEDIUM**

(30) Priority: 16.06.2023 CN 202310714440
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Ziebig Hengelhaupt Intellectual Property Attorneys Patentanwaltskanzlei PartGmbB
(86) International application number: PCT/CN2023/126553
(87) International publication number: WO 2024/255058

(57) **Abstract**

The present application discloses a battery swapping system, a control method for a battery swapping system, a control apparatus, and a storage medium. The battery swapping system includes: a transformer, a power conversion system, a bus apparatus, a control apparatus, and a plurality of battery swapping compartments, where the plurality of battery swapping compartments are connected to the power conversion system through the bus apparatus; the power conversion system is connected to an external power grid of the battery swapping system through the transformer; the control apparatus is connected to the plurality of battery swapping compartments; the plurality of battery swapping compartments are configured to store a plurality of traction batteries; and the control apparatus is configured to control a first target traction battery to transmit electric energy to the power grid, and is further configured to control a second target traction battery to acquire electric energy from the power grid, where the first target traction battery is a traction battery that has a capability of supplying power to the power grid while ensuring performance of the first target traction battery. Through a solution of the present application, the system integration of the battery swapping system can be improved, and the value of the battery swapping system in energy supply is realized as much as possible with relatively low hardware costs.

## Description

### CROSS-REFERENCE TO RELATED APPLICATIONS

The present application claims priority to Chinese Patent Application No. 202310714440.2, filed with the China National Intellectual Property Administration on June 16, 2023, and entitled "BATTERY SWAPPING SYSTEM, CONTROL METHOD FOR BATTERY SWAPPING SYSTEM, CONTROL APPARATUS, AND STORAGE MEDIUM", which is incorporated herein by reference in its entirety.

### TECHNICAL FIELD

The present application belongs to the field of energy technologies, and particularly relates to a battery swapping system, a control method for a battery swapping system, a control apparatus, and a computer-readable storage medium.

### BACKGROUND

With vigorous promotion and policy guidance of new energy, battery swapping has become a particularly important technical route in the field of vehicle electrification. In recent years, with the widespread adoption of battery swapping technology, battery swapping systems focused on providing battery swapping services for electric vehicles have been established in the market, marking an early stage of battery swapping development.

However, in a current battery swapping system, a direct current (DC) charging pile is typically configured for each battery swapping compartment, resulting in low system integration, relatively high hardware costs, and a single function of the battery swapping system, which cannot realize the value of the battery swapping system in energy supply more fully.

### SUMMARY

The present application provides a battery swapping system, a control method for a battery swapping system, a control apparatus, and a computer-readable storage medium, the system integration of the battery swapping system can be improved, and the value of the battery swapping system in energy supply is realized as much as possible with relatively low hardware costs.

According to a first aspect, the present application provides a battery swapping system. The battery swapping system includes: a transformer, a power conversion system (Power Conversion System, PCS), a bus apparatus, a control apparatus, and a plurality of battery swapping compartments.

The plurality of battery swapping compartments are connected to the PCS through the bus apparatus; the PCS is connected to an external power grid of the battery swapping system through the transformer; the control apparatus is connected to the plurality of battery swapping compartments; and the plurality of battery swapping compartments are configured to store a plurality of traction batteries.

The control apparatus is configured to control a first target traction battery among the plurality of traction batteries to transmit electric energy to the power grid via the bus apparatus and the PCS, where the first target traction battery is a traction battery that has a capability of supplying power to the power grid while ensuring performance of the first target traction battery.

The control apparatus is further configured to control a second target traction battery among the plurality of traction batteries to acquire electric energy from the power grid via the bus apparatus and the PCS.

According to a second aspect, the present application provides a control method for a battery swapping system. The control method for a battery swapping system is applied to the battery swapping system according to the first aspect. The control method for a battery swapping system includes:
acquiring state information of the plurality of traction batteries; and
controlling, according to the state information of the plurality of traction batteries, the first target traction battery among the plurality of traction batteries to transmit electric energy to the power grid via the bus apparatus and the power conversion system.

According to a third aspect, the present application provides a control apparatus, the control apparatus includes a memory, a processor, and a computer program stored in the memory and executable on the processor, and the processor, when executing the computer program, implements the steps of the method according to the second aspect.

According to a fourth aspect, the present application provides a computer-readable storage medium storing a computer program, and when the computer program is executed by a processor, the steps of the method according to the first aspect is implemented.

Compared with a prior art, the present application has the following beneficial effects: system architecture of a battery swapping system is optimized by adjusting a one-to-one DC charging pile in an existing battery swapping system with a one-to-many PCS, and providing a bus apparatus and a control apparatus between the PCS and battery swapping compartments. Through the newly added PCS, the battery swapping system has a bidirectional electric energy transmission capability, and hardware costs are reduced. Based on this optimized system architecture, the control apparatus can, according to the needs of actual application scenarios, control a first target traction battery among a plurality of traction batteries stored in the battery swapping compartments to transmit electric energy to a power grid via the bus apparatus and the PCS, and control a second target traction battery among the plurality of traction batteries stored in the battery swapping compartments to acquire electric energy from the power grid via the bus apparatus and the PCS, thereby enabling the battery swapping system to realize the value of grid-connected peak shaving and valley filling in energy supply.

It can be understood that the beneficial effects of the second to fourth aspects mentioned above can refer to the relevant description in the first aspect, and details are not repeated here.

### BRIEF DESCRIPTION OF DRAWINGS

To more clearly illustrate technical solutions in embodiments of the present application, drawings required for the description of the embodiments or a prior art are briefly introduced below. Apparently, the drawings described below are only some embodiments of the present application, and those of ordinary skill in the art can further obtain other drawings based on these drawings without creative effort.
FIG. 1 is a schematic diagram of system architecture of a battery swapping system in the prior art;
FIG. 2 is a schematic diagram of system architecture of a battery swapping system provided by an embodiment of the present application;
FIG. 3 is a schematic flowchart of an implementation of a control method for a battery swapping system provided by an embodiment of the present application; and
FIG. 4 is a schematic structural diagram of a control apparatus provided by an embodiment of the present application.

### DESCRIPTION OF EMBODIMENTS

In the following description, for purposes of explanation rather than limitation, specific details such as particular system structures and technologies are set forth to provide a thorough understanding of embodiments of the present application. However, those skilled in the art aware that the present application may be implemented in other embodiments without these specific details. In other instances, detailed descriptions of well-known systems, apparatuses, circuits, and methods are omitted to avoid unnecessary details obstructing the description of the present application.

It should be understood that when used in the specification and the appended claims of the present application, the term "include" indicates the presence of described features, integers, steps, operations, elements, and/or components, but does not preclude the presence or addition of one or more other features, integers, steps, operations, elements, components, and/or collections thereof.

It should be further understood that the term "and/or" as used in the specification and the appended claims of the present application refers to any and all possible combinations of one or more of the associated listed items and includes such combinations.

As used in the specification and the appended claims of the present application, the term "if" may be interpreted contextually as "when" or "once" or "in response to determining" or "in response to detecting". Similarly, the phrases "if determined" or "if [the described condition or event] is detected" may be interpreted contextually to mean "upon determining" or "in response to determining" or "upon detecting [the described condition or event]" or "in response to detecting [the described condition or event]".

Furthermore, in the description of the specification and the appended claims of the present application, the terms "first", "second", and the like are used only for distinguishing descriptions and cannot be construed as indicating or implying relative importance.

Reference to "one embodiment" or "some embodiments" described in the specification of the present application means that a particular feature, structure, or characteristic described in combination with the embodiment is included in one or more embodiments of the present application. Thus, the phrases "in one embodiment", "in some embodiments", "in some other embodiments", "in yet other embodiments", and the like appearing in different places in the specification do not necessarily refer to the same embodiment, but rather mean "one or more but not all embodiments" unless specifically emphasized otherwise. The terms "include", "comprise", "have", and variations thereof mean "including but not limited to", unless expressly specified otherwise.

With vigorous promotion and policy guidance of new energy, battery swapping has become a particularly important technical route in the field of vehicle electrification. In recent years, with the widespread adoption of battery swapping technology, battery swapping systems (for example, battery swapping stations) focused on providing battery swapping services for electric vehicles have been established in the market, marking an early stage of battery swapping development.

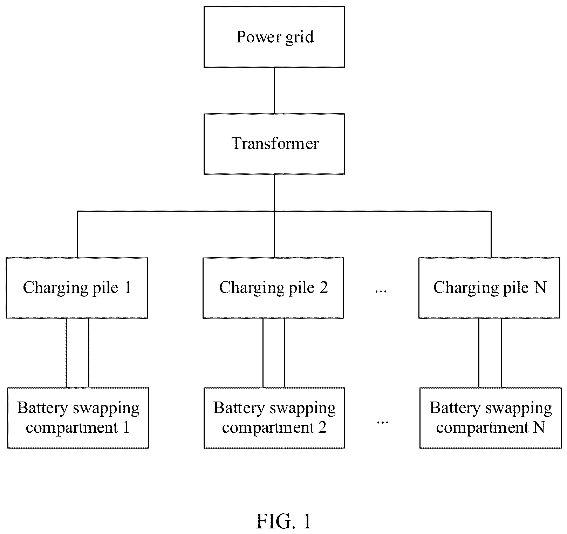

Referring to FIG. 1, FIG. 1 is system architecture of a current battery swapping system. As shown in FIG. 1, according to the current battery swapping system, one DC charging pile is typically configured for each battery swapping compartment; that is, DC charging piles equal in number to the battery swapping compartments need to be configured in the battery swapping system, which leads to low system integration of the battery swapping system on one hand, and leads to relatively high hardware costs of the battery swapping system on the other hand. Moreover, limited by a single function of the DC charging pile, the current battery swapping system can only unidirectionally transmit electric energy from a power grid to the battery swapping compartments, resulting in a single interaction mode between the battery swapping system and the power grid, and the full value of the battery swapping system in energy supply cannot be realized. The power grid refers to the entirety composed of substations and transmission and distribution lines of various voltages outside the battery swapping system.

In view of the above considerations, the embodiments of the present application propose a battery swapping system, a control method for a battery swapping system, a control apparatus, and a computer-readable storage medium, which improve system architecture of the battery swapping system to improve system integration of the battery swapping system, and the value of the battery swapping system in energy supply is realized as much as possible with relatively low hardware costs.

By adjusting a one-to-one DC charging pile in the battery swapping system to a one-to-many PCS, the battery swapping system has a bidirectional electric energy transmission capability, and hardware costs are reduced. In addition, a control apparatus is further provided between the PCS and the battery swapping compartments. The control apparatus can, according to the needs of actual application scenarios, control a first target traction battery among a plurality of traction batteries stored in the battery swapping compartments to transmit electric energy to the power grid, thereby enabling the battery swapping system to realize the value of grid-connected peak shaving and valley filling in energy supply.

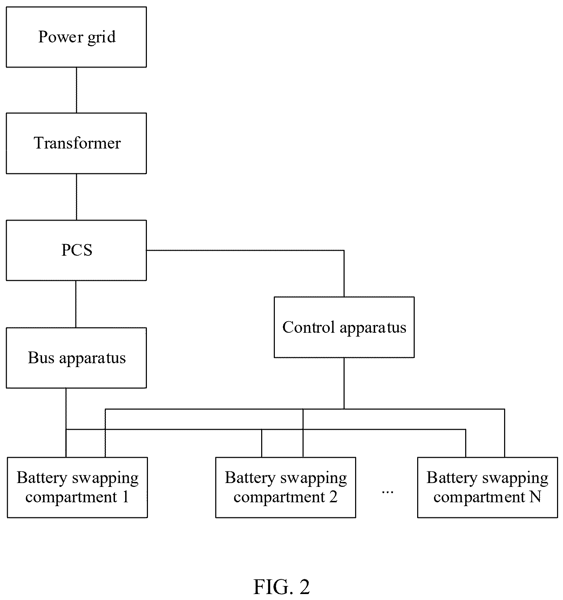

To facilitate understanding of the battery swapping system proposed by the embodiments of the present application, the battery swapping system is explained and described below through specific embodiments. Referring to FIG. 2, FIG. 2 is a schematic diagram of system architecture of the battery swapping system proposed by an embodiment of the present application. As shown in FIG. 2, the battery swapping system includes, but is not limited to, the following devices: a transformer, a PCS, a bus apparatus, a control apparatus, and a plurality of battery swapping compartments, such as battery swapping compartment 1 to battery swapping compartment N. Each battery swapping compartment can store a plurality of traction batteries.

Compared with the prior art, the battery swapping system proposed by the embodiments of the present application includes the following improvements:

One end of the transformer is connected to an external power grid of the battery swapping system, and the other end is connected to the PCS. That is, the PCS is connected to the power grid through the transformer.

A bus apparatus and a control apparatus are provided between the plurality of battery swapping compartments and the PCS. Specifically, the plurality of battery swapping compartments are connected to the PCS through the bus apparatus, which can be manifested as that: a connection between the PCS and the bus apparatus and connections between the bus apparatus and the plurality of battery swapping compartments are all high-voltage circuit connections. Specifically, the control apparatus is connected to the plurality of battery swapping compartments, which can be manifested as that: connections between the control apparatus and the plurality of battery swapping compartments are all low-voltage communication circuit connections. Further, the control apparatus is also connected to the PCS, which can be manifested as that: a connection between the control apparatus and the PCS is also a low-voltage communication circuit connection.

The transformer has a function of stepping down high voltage and stepping up low voltage; the PCS is integrated with an alternating current/direct current (AC/DC) conversion module and has an AC/DC conversion capability, and bidirectional electric energy transmission can be achieved through the PCS; the bus apparatus is a primary system for electric energy transmission in the battery swapping system, and has a function of aggregating electric energy transmission channels of the plurality of battery swapping compartments; and the control apparatus is a secondary system for electric energy transmission in the battery swapping system, and has a function of controlling operating states of the traction batteries in the battery swapping compartments and the PCS.

Based on the functions of the devices in the proposed battery swapping system, the control apparatus can control the first target traction battery among the plurality of traction batteries to transmit electric energy to the power grid via the bus apparatus and the PCS, thereby enabling the first target traction battery to supply power to the power grid. To avoid damage to the service life of the traction battery due to over-discharge, the first target traction battery may be: a traction battery having a capability of supplying power to the power grid while ensuring performance of the first target traction battery. The first target traction battery may be specifically all or part of the plurality of traction batteries, and may be determined according to a state of each traction battery and a control strategy adopted by the control apparatus.

In addition, the control apparatus can further control a second target traction battery among the plurality of traction batteries to acquire electric energy from the power grid via the bus apparatus and the PCS, thereby enabling the power grid to charge the second target traction battery. Similar to the first target traction battery, the second target traction battery may be specifically all or part of the plurality of traction batteries.

It should be noted that an operation of the first target traction battery transmitting electric energy to the power grid and an operation of the second target traction battery acquiring electric energy from the power grid cannot be performed simultaneously. That is, the control apparatus cannot control the first target traction battery to transmit electric energy to the power grid while controlling the second target traction battery to acquire electric energy from the power grid.

In addition, to fully realize a battery swapping function of the battery swapping system, the control apparatus can also instruct a third target traction battery among the plurality of traction batteries to perform battery swapping for an electric device, for example, information about the third target traction battery (for example, a serial number and/or a position) may be displayed through a display screen and the like to guide a user to perform battery swapping for the electric device based on the third target traction battery; or, the information about the third target traction battery may alternatively be sent to a battery swapping device, for example, a battery swapping cart, to guide the battery swapping device to perform battery swapping for the electric device based on the third target traction battery. The electric device is specifically a device that has insufficient charge, such as an electric vehicle that has insufficient charge. The third target traction battery may be a battery that is fully charged or nearly fully charged among the plurality of traction batteries. Through a battery swapping operation performed by the battery swapping system, the electric device can be immediately put back into normal use after the battery swap.

In the battery swapping system proposed by the embodiments of the present application, the number of PCSs and bus apparatuses can be expanded according to actual conditions to adapt to the number of battery swapping compartments and voltage levels of the traction batteries. Based on this, as an example, in the battery swapping system, the PCS may include a first PCS and a second PCS (there may be more PCSs actually), and the bus apparatus may include a first bus apparatus and a second bus apparatus (there may be more bus apparatuses actually); and then, a first battery swapping compartment among the plurality of battery swapping compartments may be connected to the first PCS through the first bus apparatus, and a second battery swapping compartment among the plurality of battery swapping compartments may be connected to the second PCS through the second bus apparatus, where the first battery swapping compartment is different from the second battery swapping compartment, and both are part of the plurality of battery swapping compartments.

In some examples, to prevent a device from being damaged by high voltage, in an optimized battery swapping system, considering that traction batteries may need to acquire electric energy from the power grid, the voltage level on an AC side of the PCS needs to match the voltage level of an output voltage of the transformer; and considering that traction batteries may alternatively need to transmit electric energy to the power grid, the voltage level on a DC side of the PCS needs to match the voltage level of an output voltage of the bus apparatus, and a DC withstand voltage capability of the bus apparatus needs to match the voltage level of the connected battery swapping compartments.

Thus, if there are a plurality of types of traction batteries with different voltage levels in a battery swapping system, the number of bus apparatuses and PCS may be considered to be expanded. Specifically, if there are N different batches of traction batteries, different batches of traction batteries are respectively stored in different battery swapping compartments, and different batches of traction batteries have different voltage levels, the battery swapping system can correspondingly expand to include N bus apparatuses and N PCS, and each batch of traction batteries has a corresponding bus apparatus and PCS, so that the voltage level of a batch of traction batteries matches the DC withstand voltage capability of the corresponding bus apparatus and the voltage level of the corresponding PCS. Certainly, the expansion of the number of PCSs further helps the battery swapping system meet charging and discharging demands of more traction batteries.

To ensure that the traction batteries are not damaged during electric energy transmission, the control apparatus may also monitor a battery state of each first target traction battery during controlling the first target traction battery to transmit electric energy to the power grid, periodically sample the voltage and temperature of each first target traction battery, and may cut off the electric energy transmission from the traction battery to the power grid in a case of an abnormality in the traction battery, that is, control the traction battery to stop transmitting electric energy to the power grid. As an example, the abnormality includes, but is not limited to, that a battery voltage is less than a preset lower voltage threshold or a battery temperature is greater than a preset temperature threshold. Similarly, the control apparatus may also monitor a battery state of each second target traction battery during controlling the second target traction battery to acquire electric energy from the power grid, periodically sample the voltage and temperature of each second target traction battery, and may cut off the electric energy transmission from the power grid to the traction battery in a case of an abnormality in the traction battery, that is, stop the traction battery from acquiring electric energy from the power grid. As an example, the abnormality includes, but is not limited to, that a battery voltage is greater than a preset upper voltage threshold or a battery temperature is greater than a preset temperature threshold.

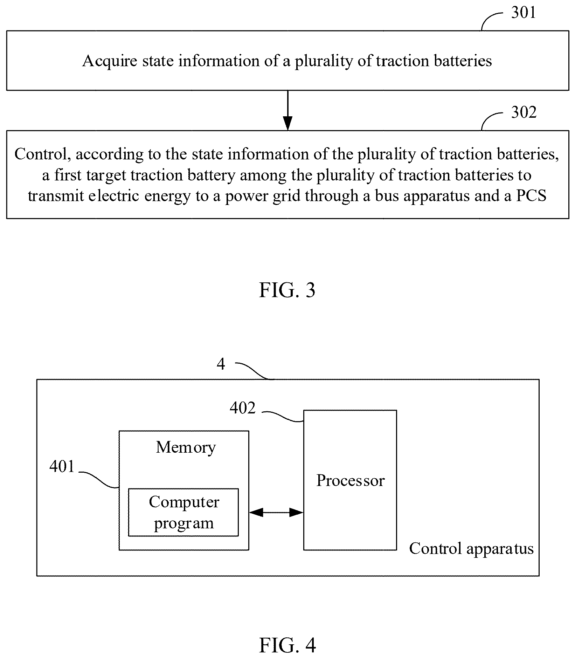

Based on the optimized battery swapping system proposed above, the control method for a battery swapping system is explained and described below through specific embodiments. The control method for a battery swapping system is applied to the optimized battery swapping system, and specifically to the control apparatus in the battery swapping system. Referring to FIG. 3, the control method for a battery swapping system includes the following steps:
Step 301: Acquire state information of a plurality of traction batteries.

It can be learned from the system architecture of the battery swapping system described above, the control apparatus has established low-voltage communication circuit connections with a plurality of battery swapping compartments; and based on this, through the low-voltage communication circuit connections, the control apparatus may acquire the state information of all traction batteries connected to the battery swapping compartments. As an example, the state information may include, but is not limited to, one or more of the following: state of charge, temperature, and duration of current stay in a station.

Step 302: Control, according to the state information of the plurality of traction batteries, a first target traction battery among the plurality of traction batteries to transmit electric energy to a power grid via a bus apparatus and a PCS.

To avoid excessive consumption of the traction batteries during transmitting electric energy to the power grid and to ensure orderly electric energy transmission, the control apparatus may be preset with a corresponding control strategy. Thus, the control apparatus may determine, from the plurality of traction batteries connected to the battery swapping system, first target traction batteries that meet the control strategy, that is, these first target traction batteries may transmit electric energy outward while ensuring performance of the first target traction batteries. Thus, the control apparatus may control these first target traction batteries to transmit electric energy to the power grid via the bus apparatus and the PCS.

In some examples, the control strategy may be that: a traction battery with a state of charge greater than a preset first state of charge threshold may be determined as a first target traction battery. The first state of charge threshold may be set to 80% or another value, and may be specifically determined by staff of the battery swapping system according to a material and performance of the traction battery. It can be understood that the purpose of this control strategy is that: the state of charge of the traction battery greater than the preset first state of charge threshold indicates that the traction battery has been fully charged or nearly fully charged previously, and retains a significant amount of electric energy, and thus the traction battery can be determined as the first target traction battery.

In some examples, the control strategy may alternatively be that: a traction battery with a duration of current stay in a station greater than a preset first duration threshold may be determined as a first target traction battery. The first duration threshold may be specifically determined by staff of the battery swapping system according to duration for charging the traction battery from an insufficient charge state to a fully charged state. It can be understood that the purpose of this control strategy is that: the duration of the current stay in the station of the traction battery greater than the preset first duration threshold indicates that the traction battery has been charged in the battery swapping system for a relatively long period and retains a significant amount of electric energy, and thus the traction battery can be determined as the first target traction battery.

In some examples, the control strategy may alternatively be that: the plurality of traction batteries connected to the battery swapping system are sorted in descending order of state of charge, and a specified number of top-ranked traction batteries are determined as the first target traction batteries. The specified number may be specifically set by the staff of the battery swapping system according to the total number of traction batteries connected to the battery swapping system, for example, may be set to 20% of the total number. It can be understood that the purpose of this control strategy is that: after sorting in descending order of state of charge, the top-ranked traction batteries are the traction batteries with relatively insufficient charge in the battery swapping system, and thus can be determined as the first target traction batteries. Further, considering that there may be an extreme case where all traction batteries in the battery swapping system may have relatively insufficient charge, to avoid the traction batteries continuing to transmit electric energy outward in a case of insufficient charge, the control apparatus may determine, among the specified number of top-ranked traction batteries, the traction batteries with a state of charge greater than a preset second state of charge threshold as the first target traction batteries. The second state of charge threshold is lower than the first state of charge threshold described above, for example, the second state of charge threshold may be set to 50% or another value.

In some embodiments, considering that the electric energy supply of the power grid is generally sufficient most of the time, the traction batteries in the battery swapping system do not need to transmit electric energy to the power grid at all the time, but only needs to transmit electric energy to the power grid when the electric energy supply of the power grid is insufficient. Based on this, before step 302, the control apparatus may alternatively acquire power state information of the power grid first. Correspondingly, step 302 may be manifested as: controlling, according to the power state information of the power grid and the state information of the plurality of traction batteries, the first target traction battery among the plurality of traction batteries to transmit electric energy to the power grid via the bus apparatus and the PCS.

The control apparatus can perform data interaction with the power grid through a station control system of the battery swapping system and an external cloud platform to acquire the power state information of the power grid. The power state information may include, but is not limited to, at least one of the following: power load, load state, and corresponding duration.

Through the power state information of the power grid, the control apparatus can learn whether the current electric energy supply of the power grid is sufficient. Only when the electric energy supply of the power grid is insufficient, it is considered that it is necessary for the current battery swapping system to transmit electric energy to the power grid. In this case, the control apparatus determines the first target traction battery from the plurality of traction batteries based on any of the control strategies proposed above to transmit electric energy to the power grid.

Specifically, the control apparatus may determine, according to the power state information of the power grid, whether the power grid is in a specified load state, where the specified load state refers to a state in which the difference between the power load of the power grid and a preset power load is less than a preset difference threshold. The preset power load may be specifically determined through big data analysis of power load conditions when the electric energy supply of the power grid was insufficient in the past; or, the preset power load may alternatively be determined according to maximum power load of the power grid over a past period; or, the preset power load may alternatively be determined according to a maximum power generation capacity of the power grid.

It may be understood that if the power state information carries power load information, the control apparatus needs to compare the power load information with the preset power load to determine whether the power grid is in the specified load state. If the power state information includes load state information, the control apparatus can directly determine whether the load state is the specified load state. Certainly, if an information transmission strategy of the power grid is to transmit power state information carrying the load state only when the load state in the specified load state, the control apparatus may alternatively determine that the power grid is currently in the specified load state after receiving the power state information.

When the power grid is in the specified load state, the control apparatus may consider that the current electric energy supply of the power grid is insufficient, and thus control the first target traction battery to transmit electric energy to the power grid. Certainly, to avoid frequent switching of charging and discharging states of the traction batteries due to short-term energy supply fluctuations of the power grid, the control apparatus may alternatively compare the duration of the power grid in the specified load state with a preset second duration threshold; and when the duration of the power grid in the specified load state exceeds the second duration threshold, the control apparatus may consider that the current electric energy supply of the power grid is indeed insufficient, and thus control the first target traction battery to transmit electric energy to the power grid via the bus apparatus and the PCS.

In some embodiments, in a case where the power grid is not in the specified load state, or in a case where no first target traction battery is determined among the plurality of traction batteries, the control apparatus may determine a second target traction battery among the plurality of traction batteries according to the state information of the plurality of traction batteries, and control the second target traction battery to acquire electric energy from the power grid via the bus apparatus and the PCS.

It may be understood that if the power grid is not in the specified load state, it indicates that the power grid does not have a problem about insufficient electric energy supply currently, that is, it is not currently a peak usage period. In this case, the battery swapping system may normally realize a function thereof to charge the traction batteries. Considering that some traction batteries in the battery swapping system may already be fully charged, the second target traction battery in this case may be: a traction battery with a state of charge not reached the first state of charge threshold, that is, a traction battery that is not fully charged or not nearly fully charged.

In addition, through the control strategies described above, it may be learned that it is possible that all traction batteries are determined as the first target traction batteries, only part traction batteries are determined as the first target traction batteries, or no traction battery is determined as the first target traction battery. In the case where no traction battery is determined as the first target traction batteries, it may be considered that all current traction batteries do not store sufficient electric energy. Considering that the most primary purpose of the battery swapping system is to meet battery swapping demands of a user, the second target traction battery in this case may be all traction batteries. That is, for the battery swapping system, the priority of performing energy supply to the traction batteries is higher than the priority of performing energy supply to the power grid. In an extreme case where all traction batteries in the battery swapping system have relatively insufficient charge, even if the energy supply of the power grid is insufficient, the battery swapping system can still acquire electric energy from the power grid.

In some embodiments, in a case where the battery swapping system detects that an electric device enters a station, the control apparatus may alternatively control a third target traction battery among the plurality of traction batteries to perform battery swapping for the electric device, thereby fully realizing a battery swapping function of the battery swapping system, and enabling the electric device to be immediately put back into normal use after the battery swap. The electric device is specifically a device that has insufficient charge, such as an electric vehicle that has insufficient charge. The third target traction battery may be a battery that is fully charged or nearly fully charged among the plurality of traction batteries.

It may be learned from the above that, in the embodiments of the present application, system architecture of a battery swapping system is optimized by adjusting a one-to-one DC charging pile in an existing battery swapping system to a one-to-many PCS, and providing a bus apparatus and a control apparatus between the PCS and battery swapping compartments. Through the newly added PCS, the battery swapping system has a bidirectional electric energy transmission capability, and hardware costs are reduced. Based on this optimized system architecture, the control apparatus can, according to the needs of actual application scenarios, control a first target traction battery among a plurality of traction batteries stored in the battery swapping compartments to transmit electric energy to a power grid, and control a second target traction battery among the plurality of traction batteries stored in the battery swapping compartments to acquire electric energy from the power grid, thereby enabling the battery swapping system to realize the value of grid-connected peak shaving and valley filling in energy supply.

Corresponding to the control method for the battery swapping system provided above, the embodiments of the present application further provide a control apparatus. Referring to FIG. 4, a control apparatus 4 in the embodiments of the present application includes: a memory 401, one or more processors 402 (only one is shown in FIG. 4), and a computer program stored in the memory 401 and executable on the processor. The memory 401 is configured to store software programs and modules, and the processor 402 executes various functional applications and data processing by running software programs and units stored in the memory 401 to acquire resources corresponding to the above preset events. Specifically, the processor 402 implements the following steps by running the computer program stored in the memory 401:
acquiring state information of the plurality of traction batteries; and
controlling, according to the state information of the plurality of traction batteries, the first target traction battery among the plurality of traction batteries to transmit electric energy to the power grid via the bus apparatus and the power conversion system.

Assuming the above is a first possible implementation, in a second possible implementation provided based on the first possible implementation, before controlling, according to the state information of the plurality of traction batteries, the first target traction battery among the plurality of traction batteries to transmit electric energy to the power grid via the bus apparatus and the power conversion system, the processor 402 implements the following steps by running the computer program stored in the memory 401:
acquiring power state information of the power grid; and
the controlling, according to the state information of the plurality of traction batteries, the first target traction battery among the plurality of traction batteries to transmit electric energy to the power grid via the bus apparatus and the power conversion system includes:
   controlling, according to the power state information of the power grid and the state information of the plurality of traction batteries, the first target traction battery among the plurality of traction batteries to transmit electric energy to the power grid via the bus apparatus and the power conversion system.

In a third possible implementation provided based on the second possible implementation, the controlling, according to the power state information of the power grid and the state information of the plurality of traction batteries, the first target traction battery among the plurality of traction batteries to transmit electric energy to the power grid via the bus apparatus and the power conversion system includes:
determining, according to the power state information of the power grid, whether the power grid is in a specified load state;
in a case where the power grid is in the specified load state, determining, according to the state information of the plurality of traction batteries, the first target traction battery among the plurality of traction batteries; and
controlling the first target traction battery to transmit electric energy to the power grid via the bus apparatus and the power conversion system.

In a fourth possible implementation provided based on the third possible implementation, the state information includes a state of charge; and the determining, according to the state information of the plurality of traction batteries, the first target traction battery among the plurality of traction batteries includes:
determining a traction battery with a state of charge greater than a preset state of charge threshold as the first target traction battery.

In a fifth possible implementation provided based on the third possible implementation, the state information includes a state of charge; and the determining, according to the state information of the plurality of traction batteries, the first target traction battery among the plurality of traction batteries includes:
sorting the plurality of traction batteries in descending order of state of charge; and
determining a specified number of top-ranked traction batteries as the first target traction batteries.

In a sixth possible implementation provided based on the third possible implementation, the processor 402 implements the following steps by running the computer program stored in the memory 401:
in a case where the power grid is not in the specified load state, or in a case where no first target traction battery is determined among the plurality of traction batteries, determining, according to the state information of the plurality of traction batteries, a second target traction battery among the plurality of traction batteries; and
controlling the second target traction battery to acquire electric energy from the power grid via the bus apparatus and the power conversion system.

It should be understood that, in the embodiments of the present application, the processor 402 may be a central processing unit (Central Processing Unit, CPU). The processor may alternatively be other general-purpose processors, digital signal processors (Digital Signal Processors, DSPs), application specific integrated circuits (Application Specific Integrated Circuits, ASICs), field-programmable gate arrays (Field-Programmable Gate Arrays, FPGAs), or other programmable logic devices, discrete gate or transistor logic devices, discrete hardware components, and the like. The general-purpose processor may be a microprocessor, or the processor may be any conventional processor or the like.

The memory 401 may include a read-only memory and a random access memory, and provide instructions and data for the processor 402. Part or all of the memory 401 may alternatively include a non-volatile random-access memory. For example, the memory 401 may further store information of a device type.

In the above embodiments, the descriptions of the embodiments have respective emphases. For a part that is not described in detail in a certain embodiment, refer to the relevant descriptions in other embodiments.

Those of ordinary skill in the art may be aware that the units and algorithm steps in the examples described with reference to the embodiments disclosed herein can be implemented by electronic hardware or a combination of computer software and electronic hardware. Whether these functions are performed by hardware or software depends on particular applications and design constraints of the technical solutions. Those skilled in the art may realize the described functions for each particular application by different methods, but it is not to be considered that this implementation is beyond the scope of the present application.

In the embodiments provided in the present application, it should be understood that the disclosed apparatus/network device and method may be implemented in other ways. For example, the described apparatus/network device embodiments are merely schematic, for instance, the division of modules or units is only a logical function division, and there may be other divisions in actual implementation, for example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

Units described as separate components may or may not be physically separate, and components displayed as units may or may not be physical units, that is, may be located in one place or distributed across over a plurality of network units. Part or all of the units may be selected according to actual needs to achieve the purposes of the solutions of the embodiments.

The above embodiments are only used for describing rather than limiting technical solutions of the present application. Although the present application has been described in detail with reference to the foregoing embodiments, those of ordinary skill in the art will understand that they can still modify the technical solutions described in the foregoing embodiments or make equivalent substitutions for part of the technical features; and these modifications or substitutions do not make the essence of the corresponding technical solutions depart from the spirit and scope of the technical solutions of the embodiments of the present application and will be included within the protection scope of the present application.

## Claims

1. A battery swapping system, **characterized by** comprising: a transformer, a power conversion system, a bus apparatus, a control apparatus, and a plurality of battery swapping compartments,
wherein the plurality of battery swapping compartments are connected to the power conversion system through the bus apparatus; the power conversion system is connected to an external power grid of the battery swapping system through the transformer; the control apparatus is connected to the plurality of battery swapping compartments; and the plurality of battery swapping compartments are configured to store a plurality of traction batteries;
the control apparatus is configured to control a first target traction battery among the plurality of traction batteries to transmit electric energy to the power grid via the bus apparatus and the power conversion system, wherein the first target traction battery is a traction battery that has a capability of supplying power to the power grid while ensuring performance of the first target traction battery; and
the control apparatus is further configured to control a second target traction battery among the plurality of traction batteries to acquire electric energy from the power grid via the bus apparatus and the power conversion system.

2. The battery swapping system according to claim 1, **characterized in that** the power conversion system comprises a first power conversion system and a second power conversion system, and the bus apparatus comprises a first bus apparatus and a second bus apparatus; and a first battery swapping compartment among the plurality of battery swapping compartments is connected to the first power conversion system through the first bus apparatus, and a second battery swapping compartment among the plurality of battery swapping compartments is connected to the second power conversion system through the second bus apparatus.

3. The battery swapping system according to claim 1, **characterized in that** the control apparatus is further configured to instruct a third target traction battery among the plurality of traction batteries to perform battery swapping for an electric device.

4. A control method for a battery swapping system, **characterized in that** the control method for a battery swapping system is applied to the battery swapping system according to any one of claims 1 to 3, and the control method for a battery swapping system comprises:
acquiring state information of the plurality of traction batteries; and
controlling, according to the state information of the plurality of traction batteries, the first target traction battery among the plurality of traction batteries to transmit electric energy to the power grid via the bus apparatus and the power conversion system.

5. The control method for a battery swapping system according to claim 4, **characterized in that** before the controlling, according to the state information of the plurality of traction batteries, the first target traction battery among the plurality of traction batteries to transmit electric energy to the power grid via the bus apparatus and the power conversion system, the control method for a battery swapping system further comprises:
acquiring power state information of the power grid; and
the controlling, according to the state information of the plurality of traction batteries, the first target traction battery among the plurality of traction batteries to transmit electric energy to the power grid via the bus apparatus and the power conversion system comprises:
controlling, according to the power state information of the power grid and the state information of the plurality of traction batteries, the first target traction battery among the plurality of traction batteries to transmit electric energy to the power grid via the bus apparatus and the power conversion system.

6. The control method for a battery swapping system according to claim 5, **characterized in that** the controlling, according to the power state information of the power grid and the state information of the plurality of traction batteries, the first target traction battery among the plurality of traction batteries to transmit electric energy to the power grid via the bus apparatus and the power conversion system comprises:
determining, according to the power state information of the power grid, whether the power grid is in a specified load state;
in a case where the power grid is in the specified load state, determining, according to the state information of the plurality of traction batteries, the first target traction battery among the plurality of traction batteries; and
controlling the first target traction battery to transmit electric energy to the power grid via the bus apparatus and the power conversion system.

7. The control method for a battery swapping system according to claim 6, **characterized in that** the state information comprises a state of charge; and the determining, according to the state information of the plurality of traction batteries, the first target traction battery among the plurality of traction batteries comprises:
determining a traction battery with a state of charge greater than a preset state of charge threshold as the first target traction battery.

8. The control method for a battery swapping system according to claim 6, **characterized in that** the state information comprises a state of charge; and the determining, according to the state information of the plurality of traction batteries, the first target traction battery among the plurality of traction batteries comprises:
sorting the plurality of traction batteries in descending order of state of charge; and
determining a specified number of top-ranked traction batteries as the first target traction batteries.

9. The control method for a battery swapping system according to claim 6, **characterized by** further comprising:
in a case where the power grid is not in the specified load state, or in a case where no first target traction battery is determined among the plurality of traction batteries, determining, according to the state information of the plurality of traction batteries, a second target traction battery among the plurality of traction batteries; and
controlling the second target traction battery to acquire electric energy from the power grid via the bus apparatus and the power conversion system.

10. A control apparatus, comprising a memory, a processor, and a computer program stored in the memory and executable on the processor, **characterized in that** the processor, when executing the computer program, implements the method according to any one of claims 4 to 9.

11. A computer-readable storage medium, storing a computer program, **characterized in that** when the computer program is executed by a processor, the method according to any one of claims 4 to 9 is implemented.
